(19) **Europäisches Patentamt / European Patent Office / Office européen des brevets**

(11) **EP 1 215 089 B1**

(12) **EUROPEAN PATENT SPECIFICATION**

(45) Date of publication and mention
of the grant of the patent:
**03.01.2007 Bulletin 2007/01**

(51) Int Cl.:
**B62D 15/02** *(2006.01)*  **B60Q 1/48** *(2006.01)*

(21) Application number: **01934526.3**

(22) Date of filing: **04.06.2001**

(86) International application number:
**PCT/JP2001/004702**

(87) International publication number:
**WO 2002/000475 (03.01.2002 Gazette 2002/01)**

(54) **PARKING AIDING DEVICE**

EINPARKHILFE

DISPOSITIF D'AIDE AU STATIONNEMENT

(84) Designated Contracting States:
**AT BE CH CY DK ES FI GR IE IT LI LU MC NL PT SE TR**

(30) Priority: **27.06.2000 JP 2000192782**

(43) Date of publication of application:
**19.06.2002 Bulletin 2002/25**

(73) Proprietor: **KABUSHIKI KAISHA TOYOTA JIDOSHOKKI**
**Kariya-shi,**
**Aichi-ken 448-8671 (JP)**

(72) Inventors:
• **SHIMAZAKI, K.,**
**c/o K.K. Toyota Jidoshokki**
**Kariya-shi,**
**Aichi 448-8671 (JP)**
• **KURIYA, Hisashi,**
**c/o K.K. Toyota Jidoshokki**
**Kariya-shi,**
**Aichi 448-8671 (JP)**
• **SUZUKI, Isao,**
**c/o K.K. Toyota Jidoshokki**
**Kariya-shi,**
**Aichi 448-8671 (JP)**

• **ANDO, Masahiko,**
**c/o K.K. Toyota Jidoshokki**
**Kariya-shi,**
**Aichi 448-8671 (JP)**
• **KIMURA, Tomio,**
**c/o K.K.Toyota Jidoshokki**
**Kariya-shi,**
**Aichi 448-8671 (JP)**
• **TERAMURA, Kousuke,**
**c/o K.K.Toyota Jidoshokki**
**Kariya-shi,**
**Aichi 448-8671 (JP)**

(74) Representative: **TBK-Patent**
**Bavariaring 4-6**
**80336 München (DE)**

(56) References cited:
DE-A1- 19 909 811        FR-A- 2 728 859
JP-A- 5 322 592          JP-A- 10 264 841
JP-A- 11 157 404         JP-A- 2000 118 334
US-A- 4 931 930          US-A- 6 070 684
US-A- 6 072 391

**Description**

TECHNICAL FIELD

The present invention relates to a parking assisting apparatus according to the preamble of claim 1 and claim 2.

BACKGROUND ART

Conventionally, there has been proposed an apparatus which displays the rear view of a vehicle on a monitor screen when a target becomes out of sight for the driver due to a blind spot of the vehicle during a backward movement of the vehicle. For example, Japanese Patent Publication No.2-36417 discloses a vehicle rear monitor apparatus comprising a television camera for picking up an image of the rear of a vehicle, a monitor television for displaying the image picked up by the television camera, a sensor for outputting an information signal related to a steering angle of a tire, and a circuit for generating a marker signal based on the information signal from the sensor and superimposedly displaying a marker on a television screen. In this apparatus, data on a tire steering angle and data on marker positions along the direction in which the vehicle moves backward, which corresponds to the steering angle, are stored in a ROM. A predicted traveling locus of the backing-up vehicle based on the steering angle at that time is displayed on the television screen as a series of markers superimposed on the image picked up by the television camera.

In this apparatus, when moving the vehicle backward, the rear view including the road condition, etc. and the predicted traveling locus of the backward movement of the vehicle are displayed on the screen of the monitor television, so that the driver is enabled to move the vehicle backward by operating the steering wheel while watching the television screen without having to turn back.

When performing tandem parking, the vehicle is moved backward in parallel with the road, for example, and the steering wheel is steered at an appropriate position so that the vehicle is advanced into a parking space. Further, it is necessary to steer the steering wheel in the reverse direction and guide the vehicle to a desired parking position. However, in the conventional rear monitor apparatus, it is difficult for the driver to determine where to start the turning of the steering wheel and where to steer it in the reverse direction , or by what amount the steering is to be performed solely by watching the rear view and the predicted vehicle backward movement locus displayed on the television screen. In this regard, if the right operating method and operating timing can be specifically ascertained in accordance with the vehicle position, it will be advantageously possible even for a driver unaccustomed to the operation to easily perform the steering. Further, if it is possible to obtain steering information other than that from the television screen, there will be no need for the driver to keep on watching the television screen, making it advantageously possible to drive while looking around the vehicle.

A parking assisting apparatus according to the preamble of claim 1 and claim 2 is known from DE-A-199 09 811.

SUMMARY OF THE INVENTION

It is an object of the present invention to provide a parking assisting apparatus which makes it possible for the driver to easily ascertain the right timing for steering when parking the vehicle.

To achieve the above object, there is provided, in accordance with the present invention, a parking assisting apparatus as defined in claim 1 and claim 2, respectively.

It is possible to adopt an arrangement in which the controller stores a set value for determining the vehicle position through comparison with the yaw angle, the guide means providing the driver with steering information on the basis of the vehicle position determined by the set value.

The parking assisting apparatus may preferably further comprise an adjusting means for correcting the set value.

One vehicle position determined by the controller may be the position where the backward movement for back-up parking is started and where the yaw angle detected by the yaw angle detecting means is a predetermined value with respect to the reference position set by the reference setting means.

One vehicle position determined by the controller may be the position where the steering position for the steering wheel of the vehicle moving backward for tandem parking is determined and where the yaw angle detected by the yaw angle detecting means corresponds to the reference position set by the reference setting means.

One vehicle position determined by the controller may be the position where the backward movement for tandem parking is completed and where the yaw angle detected by the yaw angle detecting means is a predetermined value with respect to the reference position set by the reference setting means.

One vehicle position determined by the controller may be the position where the point for restoring the steering wheel of the vehicle moving backward for parallel parking to a straight-backward state is determined and where the yaw angle detected by the yaw angle detecting means corresponds to a predetermined position with respect to the reference position set by the reference setting means.

When performing tandem parking, the reference setting means may set a vehicle position where the driver position coincides with a predetermined position with respect to the parking space in the longitudinal direction of the vehicle as the reference position.

When performing parallel parking, the reference setting means may set a vehicle position where the driver position coincides with a predetermined position with respect to the parking space in the lateral direction of the vehicle as the reference position.

The parking assisting apparatus may be equipped with a measurement means for measuring the backward drive start position with respect to the target parking position.

The measurement means may be a measurement means for measuring the distance between a vehicle side and an obstacle.

The steering information preferably consists of sound, vibration, light, or visual information.

BRIEF DESCRIPTION OF THE DRAWINGS

Fig. 1 is a block diagram showing the construction of a parking assisting apparatus according to Embodiment 1;
Fig. 2 is a diagram showing the vehicle position at the time of parallel parking in Embodiment 1 stepwise and schematically;
Fig. 3 is a diagram showing the vehicle position at the time of tandem parking in Embodiment 1 stepwise and schematically;
Fig. 4 is a block diagram showing the construction of a parking assisting apparatus according to Embodiment 2; and
Fig. 5 is a block diagram showing the construction of a parking assisting apparatus according to Embodiment 3.

BEST MODE FOR CARRYING OUT THE INVENTION

Embodiments of this invention will now be described with reference to the accompanying drawings.

Embodiment 1.

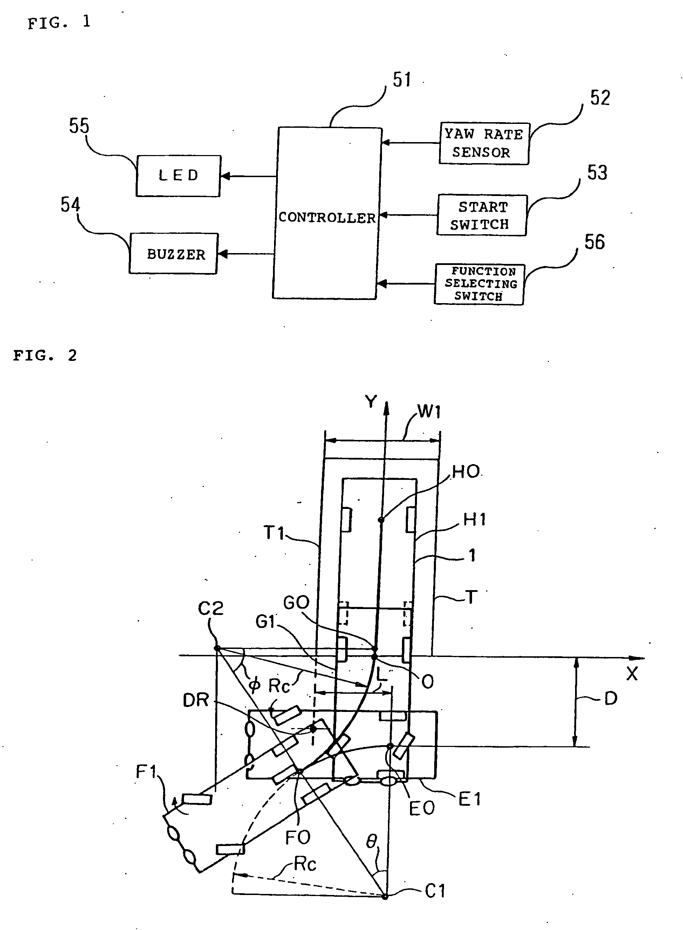

Fig. 1 shows the construction of a parking assisting apparatus according to Embodiment 1 of this invention. Connected to a controller 51 are a yaw rate sensor 52 for detecting the angular velocity in the yaw angle direction of the vehicle, a function selecting switch 56 for informing the controller 51 of whether the vehicle is to perform parallel parking or tandem parking, and a start switch 53 for causing the controller 51 to set the position where the yaw angle is 0°. Further, connected to the controller 51 are a buzzer 54 for aurally supplying the driver with steering information, and an LED 55 for visually supplying the driver with steering information.

The controller 51 is equipped with a CPU (not shown), a ROM storing a control program, and an operation RAM.

The ROM stores data on the minimum turning radius Rc when the steering wheel is steered fully to cause the vehicle to turn. The CPU operates based on the control program stored in the ROM. The controller 51 calculates the yaw angle of the vehicle from the vehicle angular velocity input from the yaw rate sensor 52, and calculates the turning angle of the vehicle to output information on operating methods, operating timing, etc. in each step of parking operation to the buzzer 54 and the LED 55.

A description will be given of the locus which the parking assisting apparatus of this embodiment causes the vehicle to form when performing parking assisting operation.

First, the case in which parallel parking is effected will be described with reference to Fig. 2.

The central point of the inlet of a parking space T where a vehicle 1 is to park constitutes the origin O. The Y-axis indicates the direction which is perpendicular to the road and in which the vehicle 1 in the parking space T moves backward, and the X-axis indicates the direction parallel to the road, that is, perpendicular to the Y-axis. Numeral W1 indicates the width of the parking range of the parking space T. The parking assisting apparatus assists the driver such that the center of the rear axle, HO, comes to the center with respect to the width direction of the parking space T and that the vehicle 1 is appropriately parked at a vehicle position H1, which is parallel to the length direction of the parking space T.

First, suppose the vehicle 1 is stopped at an initial stop position E1, where the vehicle is directed perpendicular to the parking space T, where the distance between the center EO of the rear axle of the vehicle 1 and the inlet of the parking space T is D, and where a side T1 of the parking space T coincides with the position DR of the driver inside the vehicle 1.

Next, the vehicle 1, which has been at the vehicle position E1, turns by a radius Rc by turning the steering wheel fully to the left and advances by a turning angle θ to reach a vehicle position F1. Then, the vehicle turns by the turning radius Rc by turning the steering wheel fully to the right and backs by a turning angle $\phi$. At the vehicle position G1, where the vehicle is parallel to the parking space T, the steering wheel is restored to the straight-ahead position. The vehicle is moved further backward before it is appropriately parked at the vehicle position H1 in the parking space T.

Numerals EO, FO, and GO respectively indicate the rear axle centers at the vehicle positions E1, F1, and G1.

Assuming that the distance in the X-axis direction between the driver position DR at the vehicle position E1 and the rear axle center EO is L, the coordinates (C1x, C1Y) of the turning center C1 when the vehicle 1 turns from the vehicle position E1 to the vehicle position F1 can be expressed as follows.

$$\mathtt{C1x = L - W1/2}$$

$$\mathtt{C1y = -(D + Rc)}$$

The coordinates (C2x, C2y) of the turning center C2 when the vehicle 1 turns from the vehicle position F1 to the vehicle position G1 can be expressed as follows.

$$\mathtt{C2x = -(Rc + Rc) \cdot sin\ \theta + C1x = -2Rc \cdot sin\ \theta + L - W1/2}$$

$$\mathtt{C2y = (Rc + Rc) \cdot cos\ \theta + C1y = 2Rc \cdot cos\ \theta - (D + Rc)}$$

Of these, the X-coordinate C2x can also be expressed as follows.

$$\mathtt{C2x = -Rc}$$

From the two relational expressions of the X-coordinate C2x, sin θ can be expressed as follows.

$$\mathtt{sin\ \theta = (Rc + L - W1/2)/2Rc}$$

The value of θ can be calculated by using the values of Rc, L, and W1, which are known. The value of θ is stored in the controller 51 as the set value θ.

Further, the turning angle $\phi$ by which the vehicle 1 turns from the vehicle position F1 to the vehicle position G1 can be expressed as follows.

$$\mathtt{\phi = \pi/2 - \theta}$$

Next, the operation of the parking assisting apparatus of this embodiment at the time of parallel parking will be described.

First, the driver stops the vehicle 1 at the vehicle position E1, and operates the function selecting switch 56 to select parallel parking. The controller 51 starts the parallel parking program by the operation of the function selecting switch 56. Further, when the driver operates the start switch 53, the controller 51 sets the vehicle position E1 as the position where the vehicle yaw angle is 0°. Next, the driver turns the steering wheel fully to the left and, in this state, causes the vehicle 1 to move forward.

The controller 51 calculates the vehicle yaw angle from the angular velocity of the vehicle 1 input from the yaw rate sensor 52, and compares it with the set value θ. As the vehicle 1 approaches the vehicle position F1 from the vehicle position E1, the controller 51 supplies the driver with approach information indicating that the vehicle has approached the vehicle position F1 and reaching information indicating that the vehicle has reached the vehicle position F1 as steering information through the buzzer 54 and the LED 55.

For example, the approach information is in the form of intermittent beeps of the buzzer 54 and flickering of the LED 55. The period of the beeps and that of the flickering decrease as the difference between the yaw angle and the set value $\theta$ decreases. When there is no difference between the yaw angle and the set value $\theta$, the buzzer beeps continuously and the LED 55 lights on to thereby provide reaching information.

The driver stops the vehicle 1 at the vehicle position F1 in accordance with the reaching information. Next, the driver turns the steering wheel fully to the right, and, in this state, causes the vehicle 1 to back. The driver stops the vehicle at the vehicle position G1 where the vehicle 1 is in parallel with the parking space T. At the vehicle position G1, the driver restores the steering wheel to the straight-ahead position, and then causes the vehicle 1 to back. When the vehicle 1 has been put in the parking space T, the parking operation is completed.

At the time of parking completion, the yaw angle of the vehicle 1 is approximately 90 degrees with respect to the vehicle position E1, so that it is possible to supply the driver with parking completion information on the basis of the yaw angle of the vehicle 1 with respect to the vehicle position E1.

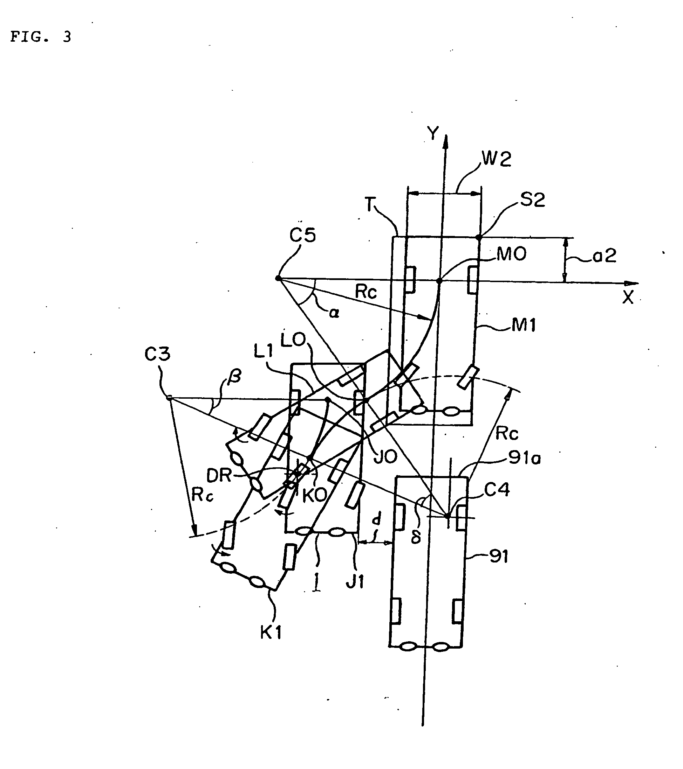

Next, a tandem parking operation will be described with reference to Fig. 3.

Suppose the vehicle 1 is to be parked in the parking space T such that the rear left end of the vehicle 1 coincides with an inner corner S2 of the parking space T. It is to be assumed that the rear axle center M0 of the vehicle 1 when the vehicle is at this vehicle position M1 is the origin. The Y-axis indicates the direction which is parallel to the road and in which the vehicle 1 backs. The X-axis is perpendicular to the Y-axis. Further, the coordinates of the inner corner of the parking space T are expressed as S2 (W2/2, a2), where a2 and W2 are the rear overhang and the width, respectively, of the vehicle 1.

The parking will be conducted in the following sequence: the vehicle 1 at the vehicle position J1 is caused to advance while turning by the radius Rc, with the steering angle of the steering wheel being maximum to the right, until the vehicle reaches the vehicle position K1. Then, the vehicle backs while turning by the radius Rc, with the steering angle being maximum to the left, until the vehicle reaches the vehicle position L1. Then, the vehicle backs while turning by the radius Rc, with the steering angle being maximum to the right, until it is appropriately parked at the vehicle position M1 in the parking space T.

First, using a vehicle 91 which is parked at a predetermined position in front of the parking space T as a guide, the vehicle 1 is stopped at the initial stop position J1 before starting tandem parking.

At the vehicle position J1, the Y-coordinate of the position DR of the driver of the vehicle 1 coincides with the Y-coordinate of the rear end 91a of the vehicle 91 and the vehicle 1 is spaced apart from the vehicle 91 by a predetermined vehicle distance d. Thus, the coordinates (J0x, J0y) of the rear axle center J0 of the vehicle position J1 can be uniquely determined from the relationship between the coordinates of the rear end 91a of the vehicle 91, the driver position DR, and the rear axle center J0, and the vehicle distance d.

The vehicle 1 at the vehicle position J1 advances to the vehicle position K1 while turning by the radius Rc, with the steering angle of the steering wheel being maximum to the right. Numeral C3 indicates the center of the turning in the process, and symbol indicates the turning angle. From the vehicle position K1, the vehicle 1 backs to the vehicle position L1 while turning by the radius Rc, with the steering angle being maximum to the left. The turning center in this process is indicated by numeral C4, and the turning angle is indicated by symbol $\delta$. Further, at the vehicle position L1, the steering wheel is steered in the reverse direction, and the vehicle backs to the vehicle position M1 while turning by the radius Rc, with the steering angle being maximum to the right. The turning center in this process is indicated by numeral C5, and the turning angle is indicated by symbol $\alpha$.

Numerals K0 and L0 respectively indicate the rear axle centers of the vehicle positions K1 and L1.

The turning angles $\alpha$, $\beta$, and $\delta$ are in the following relationship:

$$\delta = \alpha - \beta$$

The coordinates (C5x, C5y) of the turning center C5 can be expressed as follows:

$$C5x = -Rc$$

$$C5y = 0$$

The coordinates (C4x, C4y) of the turning center C4 can be expressed as follows:

$$\text{C4x = C5x + (Rc + Rc)} \cdot \cos\alpha = \text{–Rc + 2Rc} \cdot \cos\alpha$$

$$\text{C4y = C5y – (Rc + Rc)} \cdot \sin\alpha = \text{–2Rc} \cdot \sin\alpha$$

The coordinates (C3x, C3y) of the turning center C3 can be expressed as follows:

$$\text{C3x = C4x – (Rc + Rc)} \cdot \cos\beta = \text{–Rc + 2Rc} \cdot \cos\alpha - 2\text{Rc} \cdot \cos\beta$$

$$\text{C3y = C4y + (Rc + Rc)} \cdot \sin\beta = \text{–2Rc} \cdot \sin\alpha + 2\text{Rc} \cdot \sin\beta$$

The coordinates (J0x, J0y) of the rear axle center J0 of the vehicle position J1 can be expressed as follows:

$$\text{J0x = –Rc} \cdot (1 - \cos\alpha) - \text{Rc} \cdot (1 - \cos\alpha - 1 + \cos\beta) + \text{Rc} \cdot (1 - \cos\beta)$$

$$= 2\text{Rc} \cdot (\cos\alpha - \cos\beta) \qquad \ldots\ldots\ldots (1)$$

$$\text{J0y = –Rc} \cdot \sin\alpha - \text{Rc} \cdot (\sin\alpha - \sin\beta) + \text{Rc} \cdot \sin\beta$$

$$= 2\text{Rc} \cdot (\sin\beta - \sin\alpha) \qquad \ldots\ldots\ldots (2)$$

By transforming equations (1) and (2) according to trigonometric functions, the following are obtained:

$$\tan(\alpha/2 + \beta/2) = \text{J0x/J0y}$$

$$\sin2(\alpha/2 - \beta/2) = (\text{J0x2 + J0y2})/(16\text{Rc2})$$

Thus, it is possible to calculate $\alpha$ and $\beta$ by using the known coordinates (J0x, J0y) of the rear axle center J0, and the values thus obtained are stored in the controller 51 as the set values $\alpha$ and $\beta$.

To allow the vehicle 1 to be parked behind the vehicle 91 without any difficulty, the following values, for example, are adopted for the coordinates (J0x, J0y) of the rear axle center J0: J0x = 2.3 m, and J0y = 4.5 m.

It is desirable that the values of the coordinates, J0x and J0y, of the rear axle center J0 be set according to the rating, the steering characteristics, etc. of the vehicle 1.

Next, the operation at the time of tandem parking of the parking assistance apparatus of this embodiment will be described.

First, the driver causes the vehicle 1 to stop at the vehicle position J1 such that the Y-coordinate of the driver position DR coincides with the Y-coordinate of the rear end 91a of the parked vehicle 91 and that the vehicle 1 is spaced apart from the vehicle 91 by the vehicle distance d. When the function selecting switch 56 is operated to select tandem parking, the controller 51 starts the program for tandem parking. When the driver further operates the start switch 53, the controller 51 sets the vehicle position J1 as the position where the vehicle yaw angle is 0°. Next, the driver turns the steering wheel fully to the right, and in this state, causes the vehicle 1 to advance. The controller 51 calculates the vehicle yaw angle from the angular velocity of the vehicle 1 input from the yaw rate sensor 52, and compares this yaw angle with the set value β. As the vehicle 1 approaches the vehicle position K1 from the vehicle position J1, the controller 51 supplies, as in the case of parallel parking, the driver with approach information indicating that the vehicle has approached the vehicle position K1 and reaching information indicating that the vehicle has reached the vehicle position K1 by means of the buzzer 54 and the LED 55 on the basis of the difference between the yaw angle and the set value β.

The driver causes the vehicle 1 to stop at the vehicle position K1 according to the reaching information. Next, the driver turns the steering wheel fully to the left and, in this state, causes the vehicle 1 to back. The controller 51 compares the yaw angle of the vehicle with the set value $\alpha(= \beta + \delta)$. As the vehicle 1 approaches the vehicle position L1 from the vehicle position K1, that is, as the vehicle yaw angle approaches the set value α, the controller 51 supplies, as in the case of parallel parking, the driver with approach information indicating that the vehicle has approached the vehicle position L1 and reaching information indicating that the vehicle has reached the vehicle position L1 by means of the buzzer 54 and the LED 55 on the basis of the difference between the yaw angle and the set value α.

The driver causes the vehicle 1 to stop at the vehicle position L1 in accordance with the reaching information. Next, at the vehicle position L1, the driver steers the steering wheel fully in the reverse direction, i.e., to the right, and, in this state, causes the vehicle 1 to back. The driver parks the vehicle 1 at the vehicle position M1 where the vehicle 1 is parallel to the parking space T, whereby the parking is completed.

At the time of parking completion, the yaw angle of the vehicle 1 is approximately 0° with respect to the vehicle position J1, so that it is possible to supply the driver with parking completion information based on the yaw angle of the vehicle 1 with respect to the vehicle position J1.

As described above, the parking assisting apparatus of this embodiment requires neither the camera nor the monitor, so that it makes it possible to perform an appropriate parking assisting operation even in the case of a vehicle equipped with no navigation system, camera, etc.

While in this Embodiment a yaw rate sensor is used to detect the yaw angle, it is also possible to detect the yaw angle by using a position gyro or from a difference in rotation between rotation sensors respectively attached to the right and left wheels. Further, it is also possible to adopt a geomagnetic sensor, a GPS system or the like.

The means for supplying the driver with the approach information and the reaching information are not restricted to the LED 55 and the buzzer 54. It is also possible to use an LCD, a lamp or the like, giving information in the form of characters or marks through a display. Further, the information may be supplied in the form of sound or vibration transmitted through the steering wheel or the like. Further, regarding the approach information and the reaching information, it is possible to vary the flickering period of the LED 55 and the volume and tone of the buzzer 54 for each of the vehicle positions serving as the target of approach or reaching.

Further, instead of the function selecting switch and the start switch, it is possible to provide a tandem parking start switch and a parallel parking start switch. In this case, parking operation is started by depressing the start switch according to the mode of parking.

Further, instead of operating the start switch 53, it is also possible to enable the controller to identify the driver's voice so that it may be possible to vocally inform the controller of the start of the parking operation.

Further, it is not always necessary for the steering wheel to be fully turned at the time of parking. In order that the driver may perform parking operation while maintaining the steering wheel at a predetermined steering angle, it is possible to provide a steering wheel steering angle sensor which informs the driver of the steering wheel steering angle.

Embodiment 2.

In Embodiment 1, the set value θ for parallel parking and the set values α and β for tandem parking determined with reference to a predetermined initial stop position for parking are stored in the ROM of the controller 51. In Embodiment 2, in contrast, the driver can set an appropriate initial stop position. That is, the driver can correct the preset values θ, α, and β, stored in the controller, and reset these values in the controller.

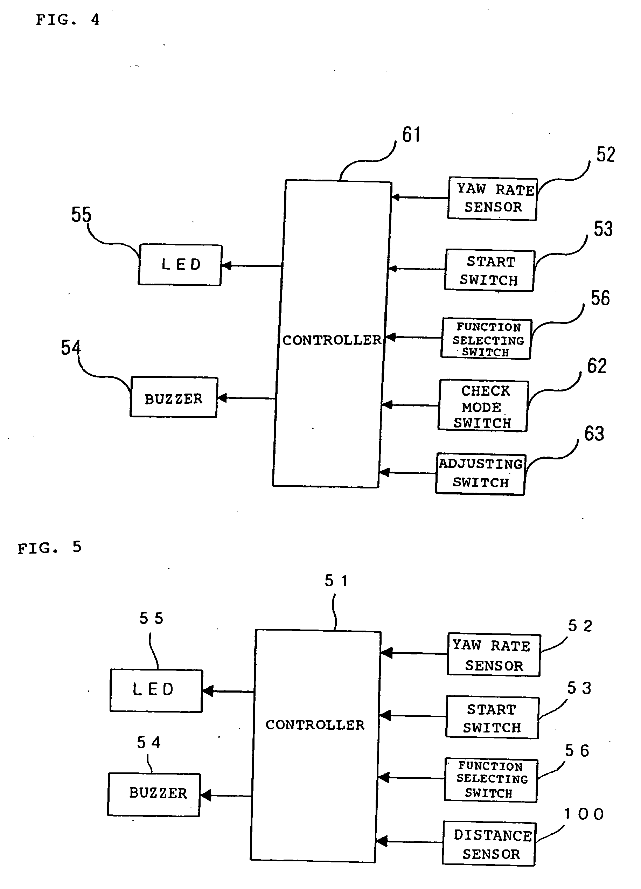

Fig. 4 shows the construction of a parking assisting apparatus according to this embodiment.

This parking assisting apparatus is formed by adding a check mode switch 62 and an adjusting switch 63 to the apparatus of Embodiment 1 shown in Fig. 1 and providing a controller 61 instead of the controller 51. The check mode switch 62 and the adjusting switch 63 are connected to the controller 61.

The adjusting switch 63 can be operated in two ways like a seesaw switch, and allows correction of the set values θ, α, and to reset them in the controller 61.

Here, with reference to Fig. 2, a description will be given of how the parking assisting apparatus of this embodiment effects the correction and resetting of the set value θ for parallel parking predetermined in the controller 61.

First, the driver stops the vehicle 1 at an appropriate vehicle position H1 in the parking space T, and causes it to advance straight by an appropriate distance before stopping it at an appropriate position near the vehicle position G1. Here, the driver operates the check mode switch 62 and, at the same time, operates the function selecting switch 56 to select parallel parking. By operating the check mode switch 62, the controller 61 starts the check mode program, and, by operating the function selecting switch 56, it resets the set value θ for parallel parking. Further, by operating the start switch 53, the controller 61 sets this vehicle position as the position where the yaw angle is 0°. Next, the driver turns the steering wheel fully to the right, and in this state, causes the vehicle 1 to advance. The controller 61 calculates the yaw angle and compares it with φ, which is a value obtained by subtracting the set value θ from the angle π/2. As the vehicle 1 advances to approach the vehicle position F1, the controller 61 supplies the driver with approach information indicating that the difference between the yaw angle and φ has approached 0 and reaching information indicating that the difference between the yaw angle and φ has reached zero, on the basis of the difference between the yaw angle and φ, by means of the buzzer 54 and the LED 55.

The driver stops the vehicle 1 according to the reaching information. Next, the driver turns the steering wheel fully to the right, and, in this state, causes the vehicle 1 to back. When the vehicle 1 has become perpendicular to the parking space T, the driver stops the vehicle 1.

When this vehicle stop position coincides with the vehicle position E1, there is no need for the driver to adjust the set value θ. In the case in which the vehicle stop position is deviated forward with respect to the vehicle position E1, when the driver operates the adjusting switch 63 in one direction, a correction signal for increasing the set value θ is input to the controller 61. On the other hand, in the case in which the vehicle stop position is deviated backward with respect to the vehicle position E1, when the driver operates the adjusting switch 63 in the other direction, a correction signal for decreasing the set value θ is input to the controller 61.

In this way, the set value θ for parallel parking can be corrected and reset in the controller 61.

By canceling the operation of the check mode switch 62, and performing parallel parking by the operation method according to Embodiment 1, it is possible for the driver to judge whether the reset value of θ is appropriate or not.

Next, the way the controller 61 corrects and resets the set values α and β used in tandem parking will be described with reference to Fig. 3.

First, the driver stops the vehicle 1 at an appropriate vehicle position in the vicinity of the vehicle position M1 in the parking space T, and operates the check mode switch 62 and the function selecting switch 56 to select tandem parking. By operating the check mode switch 62, the controller 61 starts the check mode program, and, by operating the function selecting switch 56, it performs control to reset the set values α and β for tandem parking. Further, by operating the start switch 53, the controller 61 sets this vehicle position as the position where the yaw angle is 0°. Next, the driver turns the steering wheel fully to the right and, in this state, causes the vehicle 1 to advance. The controller 61 calculates the yaw angle, and compares it with the set value α. As the vehicle 1 advances to approach the vehicle position L1, the controller 61 supplies, on the basis of the difference between the yaw angle and α, the driver with approach information indicating that the difference between the yaw angle and α has approached 0 and reaching information indicating that the difference between the yaw angle and α has reached 0 by means of the buzzer 54 and the LED 55.

The driver stops the vehicle 1 in the vicinity of the vehicle position L1 according to the reaching information. Next, the driver turns the steering wheel fully to the left, and, in this state, causes the vehicle 1 to advance. As the vehicle 1 advances to approach the vehicle position K1, the controller 61 supplies the driver with approach information indicating that the yaw angle has approached β(= α - δ) and reaching information indicating that the yaw angle has reached β by means of the buzzer 54 and the LED 55.

The driver stops the vehicle 1 in the vicinity of the vehicle position K1 according to the reaching information. Further, the driver turns the steering wheel fully to the right and, in this state, causes the vehicle 1 to back. When the vehicle 1 has become parallel to the parking space T, the driver stops the vehicle 1. When this vehicle stop position coincides with the vehicle position J1, there is no need for the driver to adjust the set values α and β. When the vehicle stop position is deviated from the vehicle position J1, the driver operates the adjusting switch 63 to adjust the set values α and β.

In this way, it is possible to correct the set values α and for tandem parking and reset them in the controller 61.

As described above, the driver can correct and reset the set value θ for parallel parking and the set values α and β for tandem parking, so that it is possible to perform a more appropriate parking assisting operation for each different vehicle and in correspondence with the condition around the parking space.

Further, there is no need to manufacture different controllers for different vehicles, so that it is possible to prevent an increase in the number of parts and the parts control is facilitated, thereby achieving a reduction in parts cost.

While in this embodiment the check mode switch 62 and the start switch 53 are provided as separate components, it is possible to omit the check mode switch 62 by, for example, adopting an arrangement in which the controller 61 starts the check mode program when the start switch 53 has been continuously operated for three seconds.

Embodiment 3.

In Embodiments 1 and 2 described above, it is necessary, in particular in the case of tandem parking, to perform operation so as to adjust the position in the X-axis direction of the vehicle 1 in the initial stop position J1 such that the distance between the side of the parked vehicle 91 and the side of the vehicle 1 is a predetermined distance d as shown, for example, in Fig. 3.

Generally speaking, this operation is difficult to perform, and the actual value of the distance is apt to be deviated from the set value d. This deviation will eventually lead to a deviation in the parking completion position.

To cope with this, this embodiment adopts a distance sensor 100 for measuring the distance between the vehicle 1 and the vehicle 91, etc. parked beside it (See Fig. 5, which shows a system configuration based on that of Embodiment 1).

When starting tandem parking, the distance between the vehicle 1 and the parked vehicle 91 is measured by the above-mentioned sensor, and, on the basis of the data obtained through the measurement, the coordinates (J0x, J0y) of the rear axle center J0 of the initial stop position J1 are corrected, and, further, correction calculation is performed on the set values $\alpha$ and $\beta$ and the value of 6 obtained therefrom. The values thus obtained are used as the target set values for the tandem parking to be performed.

It is also possible to measure the distance between the vehicle concerned and the vehicle parked beside the parking space when starting parallel parking to thereby judge whether parking is possible or not and inform the driver of the judgment result.

As described above, in the parking assisting apparatus according to the invention, it is possible to detect the parking operation step which the vehicle is in from the yaw angle of the vehicle, and, by providing a guide regarding the operating method and the operating timing for each step of the backward driving, it is possible to perform operation without any error and complete parking even when the driver is not accustomed to the operating method.

In the parking assisting apparatus according to Claim 3 of the invention, the controller stores a set value to be compared with the yaw angle to determine the vehicle position, and a guide means supplies the driver with steering information on the basis of this set value, so that an appropriate parking assistance is possible even in the case of a vehicle in which neither camera nor monitor is mounted.

In the parking assisting apparatus according to Claim 4 of the invention, the set value to be compared with the yaw angle to determine the vehicle position can be corrected, so that an appropriate parking assistance is possible for each different vehicle and according to the condition around the parking space.

In the parking assisting apparatus according to Claim 5 of the invention, it is possible to provide information on the back start position for back parking.

In the parking assisting apparatus according to Claim 6 of the invention, it is possible to provide information on the steering wheel steering point at the time of tandem parking.

In the parking assisting apparatus according to Claim 7 of the invention, it is possible to provide information on the back completion position at the time of tandem parking.

In the parking assisting apparatus according to Claims 8 and 10 of the invention, it is possible for the driver to set a reference position without having to perform any special operation.

In the parking assisting apparatus according to Claim 9 of the invention, it is possible to provide information as to where the steering wheel is to be restored to the straight-ahead position at the time of parallel parking.

In the parking assisting apparatus according to Claim 11 of the invention, there is provided a measurement means for measuring the back start position with respect to the target parking position, so that even when the vehicle position at the time of parking start is deviated from the initial stop position, it is possible to park the vehicle appropriately at the target parking position.

In the parking assisting apparatus according to Claim 12 of the invention, the measurement means measures the distance between the vehicle and an obstacle beside it, so that it is possible to park the vehicle appropriately at the target parking position by utilizing an object around the vehicle, such as another vehicle.

In the parking assisting apparatus according to Claim 13 of the invention, steering information is provided in the form of sound, so that the driver can obtain steering information without having to keep on watching the monitor screen, whereby the driver is enabled to drive while looking around the vehicle.

In the parking assisting apparatus according to Claim 14 of the invention, it is possible to provide steering information in the form of vibration, so that it is possible to perform operation easily without depending on the sense of hearing.

In the parking assisting apparatus according to Claims 15 and 16 of the invention, it is possible to provide steering information in the form of light and visual information, so that the driver can enjoy an appropriate parking assistance by steering while referring to an image of the rear of the vehicle and the light and visual information.

**Claims**

1. A parking assisting apparatus used when performing a parking operation in which a vehicle (1) is moved forward while maintaining a fixed steering angle, stopped to steer in the reverse direction, and then moved backward while maintaining a fixed steering angle to effect back-up parking in a parking space (T), the apparatus comprising:

> a yaw angle detecting means (52) for detecting a yaw angle of the vehicle (1);
> a reference setting means (51, 61) for setting a reference position for the yaw angle;
> a controller (51, 61) which determines the vehicle position on the basis of the yaw angle; and
> a guide means (51, 55) which provides the driver with steering information on the basis of the vehicle position determined by the controller (51, 61),

**characterized**
**in that** the guide means (54, 55) provides the driver with steering information at a plurality of vehicle positions determined by the controller (51, 61) based on the yaw angle.

2. A parking assisting apparatus used when performing a parking operation in which a vehicle (1) is moved forward while maintaining a fixed steering angle, stopped to steer in the reverse direction, and then moved backward while maintaining a fixed steering angle to effect back-up parking in a parking space (T), the apparatus comprising:

> a yaw angle detecting means (52) for detecting a yaw angle of the vehicle (1) ;
> a reference setting means (51, 61) for setting a reference position for the yaw angle;
> a controller (51, 61) which determines the vehicle position on the basis of the yaw angle; and
> a guide means (51, 55) which provides the driver with steering information on the basis of the vehicle position determined by the controller (51, 61),

**characterized**
**in that** the guide means (54, 55) provides the driver with steering information which includes steering information for moving the vehicle forward until the yaw angle reaches a predetermined value on the basis of the vehicle position determined by the controller (51, 61).

3. A parking assisting apparatus according to Claim 1 or 2, wherein the controller (51, 61) stores a set value for determining the vehicle position through comparison with the yaw angle, the guide means (54, 55) providing the driver with steering information on the basis of the vehicle position determined by using the set value.

4. A parking assisting apparatus according to Claim 3, further comprising an adjusting means (63) for correcting the set value.

5. A parking assisting apparatus according to one of claims 1 to 4, wherein one vehicle position determined by the controller (51, 61) is the position (F1, K1) where the backward movement for back-up parking is started, and wherein this position is the position where the yaw angle detected by the yaw angle detecting means (52) is a predetermined value with respect to the reference position set by the reference setting means (51, 61).

6. A parking assisting apparatus according to one of claims 1 to 5, wherein one vehicle position determined by the controller (51, 61) is a position (L1) of turning a steering wheel in the reverse direction when the vehicle (1) is moved backward for tandem parking and wherein this position is the position where the yaw angle detected by the yaw angle detecting means (52) corresponds to the reference position set by the reference setting means (51, 61).

7. A parking assisting apparatus according to one of claims 1 to 6, wherein one vehicle position determined by the controller (51, 61) is the position (M1) where the backward movement for tandem parking is completed and the yaw angle detected by the yaw angle detecting means (52) is a predetermined value with respect to the reference position set by the reference setting means (51, 61).

8. A parking assisting apparatus according to one of claims 1 to 7, wherein, when performing tandem parking, the reference setting means (51, 61) sets a vehicle position (J1) where the driver position (DR) coincides with a predetermined position with respect to the parking space (T) in the longitudinal direction of the vehicle (1) as the reference position.

9. A parking assisting apparatus according to one of claims 1 to 5, wherein one vehicle position determined by the controller (51, 61) is the position (G1) where the point for restoring a steering wheel of the vehicle (1) moving backward for parallel parking to a straight-backward state is determined, and
wherein this position is the position where the yaw angle detected by the yaw angle detecting means (52) corresponds to a predetermined position with respect to the reference position set by the reference setting means (51, 61).

10. A parking assisting apparatus according to one of claims 1 to 5 and 9, wherein, when performing parallel parking, the reference setting means (51, 61) sets a vehicle position (E1) where the driver position (DR) coincides with a predetermined position with respect to the parking space (T) in the lateral direction of the vehicle (1) as the reference position.

11. A parking assisting apparatus according to one of claims 1 to 10, further comprising a measurement means for measuring the backward drive start position with respect to the target parking position.

12. A parking assisting apparatus according to one of claims 1 to 4, further comprising a measurement means (100) for measuring the distance between a vehicle side and an obstacle.

13. A parking assisting apparatus according to one of claims 1 to 12, wherein the steering information is in the form of sound.

14. A parking assisting apparatus according to one of claims 1 to 13, wherein the steering information is in the form of vibration.

15. A parking assisting apparatus according to one of claims 1 to 14, wherein the steering information is in the form of light.

16. A parking assisting apparatus according to one of claims 1 to 15, wherein the steering information is in the form of visual information.


## Patentansprüche

1. Einparkhilfe, die dann angewendet wird, wenn ein Parkvorgang ausgeführt wird, bei dem ein Fahrzeug (1)
vorwärts bewegt wird, während ein feststehender Lenkwinkel beibehalten wird,
angehalten wird, um in die entgegengesetzte Richtung zu lenken, und
dann zurückbewegt wird, während ein feststehender Lenkwinkel beibehalten wird, um ein Rückwärtseinparken in einen Parkraum (T) zu bewirken, wobei das Gerät folgendes aufweist:

   eine Gierwinkelerfassungseinrichtung (52) zum Erfassen eines Gierwinkels von dem Fahrzeug (1);
   eine Referenzeinstelleinrichtung (51, 61) zum Einstellen einer Referenzposition für den Gierwinkel;
   eine Steuereinrichtung (51, 61), die die Position des Fahrzeugs auf der Grundlage des Gierwinkels bestimmt; und
   eine Führungseinrichtung (51, 55), die dem Fahrer eine Lenkinformation liefert auf der Grundlage der Position des Fahrzeugs, die durch die Steuereinrichtung (51, 61) bestimmt worden ist,

   **dadurch gekennzeichnet, dass**
   die Führungseinrichtung (54, 55) dem Fahrer eine Lenkinformation bei einer Vielzahl an Positionen des Fahrzeugs liefert, die durch die Steuereinrichtung (51, 61) auf der Grundlage des Gierwinkels bestimmt worden sind.

2. Einparkhilfe, die dann angewendet wird, wenn ein Parkvorgang ausgeführt wird, bei dem ein Fahrzeug (1)
vorwärts bewegt wird, während ein feststehender Lenkwinkel beibehalten wird,
angehalten wird, um in die entgegengesetzte Richtung zu lenken, und
dann zurückbewegt wird, während ein feststehender Lenkwinkel beibehalten wird, um ein Rückwärtseinparken in einen Parkraum (T) zu bewirken, wobei das Gerät folgendes aufweist:

   eine Gierwinkelerfassungseinrichtung (52) zum Erfassen eines Gierwinkels von dem Fahrzeug (1);
   eine Referenzeinstelleinrichtung (51, 61) zum Einstellen einer Referenzposition für den Gierwinkel;
   eine Steuereinrichtung (51, 61), die die Position des Fahrzeugs auf der Grundlage des Gierwinkels bestimmt; und
   eine Führungseinrichtung (51, 55), die dem Fahrer eine Lenkinformation liefert auf der Grundlage der Position des Fahrzeugs, die durch die Steuereinrichtung (51, 61) bestimmt worden ist,

   **dadurch gekennzeichnet, dass**

die Führungseinrichtung (54, 55) dem Fahrer eine Lenkinformation liefert, die eine Lenkinformation umfasst zum Bewegen des Fahrzeugs nach vorn, bis der Gierwinkel einen vorbestimmten Wert erreicht auf der Grundlage der Fahrzeugposition, die durch die Steuereinrichtung (51, 61) bestimmt worden ist.

3. Einparkhilfe gemäß Anspruch 1 oder 2, wobei
die Steuereinrichtung (51, 61) einen Einstellwert speichert für ein Bestimmen der Position des Fahrzeugs durch einen Vergleich mit dem Gierwinkel, wobei die Führungseinrichtung (54, 55) dem Fahrer eine Lenkinformation liefert auf der Grundlage der Position des Fahrzeugs, die durch die Anwendung des Einstellwertes bestimmt worden ist.

4. Einparkhilfe gemäß Anspruch 3, die des weiteren eine Einstelleinrichtung (63) für ein Korrigieren des Einstellwertes aufweist.

5. Einparkhilfe gemäß einem der Ansprüche 1 bis 4, wobei
eine Position des Fahrzeugs, die durch die Steuereinrichtung (51, 61) bestimmt worden ist, die Position (F1, K1) ist, bei der die Rückwärtsbewegung für das Rückwärtseinparken beginnt, und
wobei diese Position die Position ist, bei der der Gierwinkel, der durch die Gierwinkelerfassungseinrichtung (52) erfasst wird, ein vorbestimmter Wert in Bezug auf die Referenzposition ist, die durch die Referenzeinstelleinrichtung (51, 61) eingestellt worden ist.

6. Einparkhilfe gemäß einem der Ansprüche 1 bis 5, wobei
eine Position des Fahrzeugs, die durch die Steuereinrichtung (51, 61) bestimmt wird, eine Drehposition (L1) des Lenkrads in der Rückwärtsrichtung ist, wenn das Fahrzeug (1) für einen hintereinander erfolgenden Einparkvorgang rückwärtsbewegt wird, und
wobei diese Position die Position ist, bei der der Gierwinkel, der durch die Gierwinkelerfassungseinrichtung (52) erfasst wird, der Referenzposition entspricht, die durch die Referenzeinstelleinrichtung (51, 61) eingestellt worden ist.

7. Einparkhilfe gemäß einem der Ansprüche 1 bis 6, wobei
eine Position des Fahrzeugs, die durch die Steuereinrichtung (51, 61) bestimmt wird, die Position (M1) ist, bei der die Rückwärtsbewegung für das hintereinander erfolgende Einparken vollendet ist und der Gierwinkel, der durch die Gierwinkelerfassungseinrichtung (52) erfasst worden ist, ein vorbestimmter Wert in Bezug auf die Referenzposition ist, die durch die Referenzeinstelleinrichtung (51, 61) eingestellt worden ist.

8. Einparkhilfe gemäß einem der Ansprüche 1 bis 7, wobei
beim Ausführen des hintereinander erfolgenden Einparkens die Referenzeinstelleinrichtung (51, 61) eine Fahrzeugposition (J1) einstellt, bei der die Fahrerposition (DR) mit einer vorbestimmten Position in Bezug auf den Einparkraum (T) in der Längsrichtung des Fahrzeugs (1) als die Referenzposition übereinstimmt.

9. Einparkhilfe gemäß einem der Ansprüche 1 bis 5, wobei
eine Position des Fahrzeugs, die durch die Steuereinrichtung (51, 61) bestimmt wird, die Position (G1) ist, bei der der Punkt zum Zurückbringen eines Lenkrades des Fahrzeugs (1), das sich zum Zwecke des parallelen Einparkens in einen gerade nach hinten gerichteten Zustand zurückbewegt, bestimmt wird, und
wobei diese Position die Position ist, bei der der Gierwinkel, der durch die Gierwinkelerfassungseinrichtung (52) erfasst wird, einer vorbestimmten Position in Bezug auf die Referenzposition entspricht, die durch die Referenzeinstelleinrichtung (51, 61) eingestellt worden ist.

10. Einparkhilfe gemäß einem der Ansprüche 1 bis 5 und 9, wobei
beim Ausführen eines Paralleleinparkens die Referenzeinstelleinrichtung (51, 61) eine Fahrzeugposition (E1) einstellt, bei der die Fahrerposition (DR) mit einer vorbestimmten Position in Bezug auf den Parkraum (T) in der seitlichen Richtung des Fahrzeugs (1) als die Referenzposition übereinstimmt.

11. Einparkhilfe gemäß einem der Ansprüche 1 bis 10, die des weiteren eine Messeinrichtung aufweist für ein Messen der Rückwärtsfahrtstartposition in Bezug auf die Zielparkposition.

12. Einparkhilfe gemäß einem der Ansprüche 1 bis 11, die des weiteren eine Messeinrichtung (100) aufweist für ein Messen des Abstandes zwischen einer Fahrzeugseite und einem Hindernis.

13. Einparkhilfe gemäß einem der Ansprüche 1 bis 12, wobei
die Lenkinformation in Tonform vorhanden ist.

**14.** Einparkhilfe gemäß einem der Ansprüche 1 bis 13, wobei
die Lenkinformation in Vibrationsform vorhanden ist.

**15.** Einparkhilfe gemäß einem der Ansprüche 1 bis 14, wobei
die Lenkinformation in Lichtform vorhanden ist.

**16.** Einparkhilfe gemäß einem der Ansprüche 1 bis 15, wobei
die Lenkinformation in der Form einer sichtbaren Information vorhanden ist.

**Revendications**

**1.** Appareil d'aide au stationnement utilisé lorsqu'on effectue une opération de stationnement dans laquelle un véhicule (1) se déplace vers l'avant, tout en conservant un angle de braquage fixe, s'arrête pour braquer dans la direction inverse, puis se déplace vers l'arrière, tout en conservant un angle de braquage fixe, pour effectuer un stationnement en marche arrière sur la place de stationnement (T), l'appareil comprenant :

un moyen de détection d'angle de lacet (52) permettant de détecter l'angle de lacet du véhicule (1) ;
un moyen de définition de référence (51, 61) permettant de définir une position de référence pour l'angle de lacet ;
un dispositif de commande (51, 61) qui détermine la position du véhicule sur la base de l'angle de lacet ; et
un moyen de guidage (51, 55) qui fournit au conducteur des informations de braquage sur la base de la position du véhicule déterminée par le dispositif de commande (51, 61),
**caractérisé**
**en ce que** le moyen de guidage (54, 55) fournit au conducteur des informations de braquage en une pluralité de positions du véhicule déterminées par le dispositif de commande (51, 61) sur la base de l'angle de lacet.

**2.** Appareil d'aide au stationnement utilisé lorsqu'on effectue une opération de stationnement dans laquelle un véhicule (1) se déplace vers l'avant, tout en conservant un angle de braquage fixe, s'arrête pour braquer dans la direction inverse, puis se déplace vers l'arrière, tout en conservant un angle de braquage fixe pour effectuer un stationnement en marche arrière sur une place de stationnement (T), l'appareil comprenant :

un moyen de détection de l'angle de lacet (52) permettant de détecter un angle de lacet du véhicule (1) ;
un moyen de définition de référence (51, 61) permettant de définir une position de référence pour l'angle de lacet ;
un dispositif de commande (51, 61) qui détermine la position du véhicule sur la base de l'angle de lacet ; et
un moyen de guidage (51, 55) qui fournit au conducteur des informations de braquage sur la base de la position du véhicule déterminée par le dispositif de commande (51, 61),
**caractérisé**
**en ce que** le moyen de guidage (54, 55) fournit au conducteur des informations de braquage qui incluent des informations de braquage permettant de déplacer le véhicule vers l'avant jusqu'à ce que l'angle de lacet atteigne une valeur prédéterminée sur la base de la position du véhicule déterminée par le dispositif de commande (51, 61).

**3.** Appareil d'aide au stationnement selon la revendication 1 ou 2, dans lequel le dispositif de commande (51, 61) mémorise une valeur définie, afin de déterminer la position du véhicule au moyen de comparaisons avec l'angle de lacet, le moyen de guidage (54, 55) fournissant au conducteur des informations de braquage sur la base de la position du véhicule déterminée en utilisant la valeur définie.

**4.** Appareil d'aide au stationnement selon la revendication 3, comprenant en outre un moyen d'ajustement (63) permettant de corriger la valeur définie.

**5.** Appareil d'aide au stationnement selon l'une des revendications 1 à 4, dans lequel une position du véhicule déterminée par le dispositif de commande (51, 61) est la position (F1, K1) d'où part le mouvement vers l'arrière pour le stationnement en marche arrière, et
dans lequel cette position est la position dans laquelle l'angle de lacet détecté par le moyen de détection de l'angle de lacet (52) est une valeur prédéterminée par rapport à la position de référence définie par le moyen de définition de référence (51, 61).

**6.** Appareil d'aide au stationnement selon l'une des revendications 1 à 5, dans lequel une position du véhicule déterminée par le dispositif de commande (51, 61) est une position (L1) de tournage d'un volant dans la direction inverse, lorsque le véhicule (1) se déplace vers l'arrière pour un stationnement en tandem, et

dans lequel cette position est la position dans laquelle l'angle de lacet détecté par le moyen de détection d'angle de lacet (52) correspond à la position de référence définie par le moyen de définition de référence (51, 61).

7. Appareil d'aide au stationnement selon l'une des revendications 1 à 6, dans lequel une position du véhicule déterminée par le dispositif de commande (51, 61) est la position (M1) dans laquelle le mouvement vers l'arrière pour le stationnement en tandem est terminé et l'angle de lacet détecté par le moyen de détection de l'angle de lacet (52) est une valeur prédéterminée par rapport à la position de référence définie par le moyen de définition de référence (51, 61).

8. Appareil d'aide au stationnement selon l'une des revendications 1 à 7 dans lequel, lorsqu'on effectue un stationnement en tandem, le moyen de définition de référence (51, 61) définit une position du véhicule (J1) dans laquelle la position du conducteur (DR) coïncide avec une position prédéterminée par rapport à la place de stationnement (T) dans la direction longitudinale du véhicule (1) comme position de référence.

9. Appareil d'aide au stationnement selon l'une des revendications 1 à 5, dans lequel une position du véhicule déterminée par le dispositif de commande (51, 61) est la position (G1) dans laquelle le point de restauration d'un volant du véhicule (1) qui se déplace vers l'arrière pour un stationnement en parallèle en un état tout droit vers l'arrière est déterminé, et

dans lequel cette position est la position dans laquelle l'angle de lacet détecté par le moyen de détection de l'angle de lacet (52) correspond à une position prédéterminée par rapport à la position de référence définie par le moyen de définition de référence (51, 61).

10. Appareil d'aide au stationnement selon l'une des revendications 1 à 5 et 9, dans lequel, lorsqu'on effectue un stationnement en parallèle, le moyen de définition de référence (51, 61) définit une position du véhicule (E1) dans laquelle la position du conducteur (DR) coïncide avec une position prédéterminée par rapport à la place de stationnement (T) dans la direction latérale du véhicule (1) comme position de référence.

11. Appareil d'aide au stationnement selon l'une des revendications 1 à 10 comprenant en outre un moyen de mesure permettant de mesurer la position de départ de la conduite vers l'arrière par rapport à la position de stationnement cible.

12. Appareil d'aide au stationnement selon l'une des revendications 1 à 11, comprenant en outre un moyen de mesure (100) permettant de mesurer la distance entre un côté du véhicule et un obstacle.

13. Appareil d'aide au stationnement selon l'une des revendications 1 à 12, dans lequel les informations de braquage sont sous la forme d'un son.

14. Appareil d'aide au stationnement selon l'une des revendications 1 à 13, dans lequel les informations de braquage sont sous la forme d'une vibration.

15. Appareil d'aide au stationnement selon l'une des revendications 1 à 14, dans lequel les informations de braquage sont sous la forme d'une lumière.

16. Appareil d'aide au stationnement selon l'une des revendications 1 à 15, dans lequel les informations de braquage sont sous la forme d'informations visuelles.

FIG. 1

FIG. 2

FIG. 3

FIG. 4

FIG. 5